# EUROPÄISCHE PATENTANMELDUNG

(11) **EP 1 662 765 A1**
(43) Veröffentlichungstag der Anmeldung: **31.05.2006**
(21) Anmeldenummer: 05012596.2
(22) Anmeldetag: 11.06.2005
(51) Int. Cl.: H04M 3/493

(54) **Verfahren und System zur Übermittlung von Nutzdaten an ein in einem Kommunikationsnetzwerk eingebundenes datendienstfähiges Endgerät**

(30) Priorität: 24.11.2004 DE 102004056513
(71) Anmelder: Deutsche Telekom AG, 53113 Bonn (DE)
(72) Erfinder: Dihlmann, Klaus-Dieter, Dipl.-Ing., 64839 Münster-Altheim (DE); Hellenthal, Hans-Georg, Dipl.-Ing, 51105 Köln (DE)

(57) **Zusammenfassung**

Verfahren und System zur Übermittlung von Nutzdaten an ein in einem Kommunikationsnetzwerk eingebundenes datendienstfähiges Endgerät, in welchem die Nutzdaten abrufbar abgespeichert werden, wobei gewünschte Nutzdaten von einem ebenfalls am Kommunikationsnetzwerk angeschlossenen Nutzdaten-Auskunftssystem bezogen werden, indem die gewünschten Nutzdaten vom Endgerät aus über das Kommunikationsnetzwerk vom Nutzdaten-Auskunftssystem abgefragt werden, und anschließend die gewünschten Nutzdaten über einen standardisierten Datendienst an das Endgerät via Kommunikationsnetzwerk zur abrufbaren Abspeicherung gesendet werden.

## Beschreibung

Die vorliegende Erfindung betrifft ein Verfahren sowie ein System zur Übermittlung von Nutzdaten an ein in einem Kommunikationsnetzwerk eingebundenes datendienstfähiges Endgerät, in welchem die Nutzdaten dann abrufbar abgespeichert werden können.

Das Einsatzgebiet der vorliegenden Erfindung erstreckt sich auf datendienstfähige Endgeräte verschiedener Kommunikationsnetzwerke, wie Telekommunikations-Festnetze oder Mobilfunknetze. Unter einem datendienstfähigen Endgerät ist im Rahmen der vorliegenden Erfindung ein Endgerät - wie Telefon, Faxgerät oder PDA (Personal Digital Assistent) - zu verstehen, welches in der Lage ist, über einen standardisierten Datendienst Informationen auszutauschen. Unter einem standardisierten Datendienst ist hierbei so genannter "Messaging Service" zu verstehen, wie insbesondere SMS oder MMS. Der hier verwendete Begriff Nutzdaten ist definiert als in Datenform vorliegende personenspezifische Information über einen Teilnehmer, als Benutzer des Kommunikationsnetzwerkes, und umfasst Informationen über Namen, Adresse, Geburtsdatum, Rufnummer oder Faxnummer des Teilnehmers. Darüber hinaus kann die personenspezifische Information auch Bilder, Sounds und dergleichen umfassen.

Aus der DE 197 24 901 A1 geht ein datendienstfähiges Endgerät in Form eines Mobiltelefons hervor, welches wie üblich eine austauschbare Chipkarte zur Datenspeicherung besitzt. Das Endgerät ist innerhalb eines Kommunikationsnetzwerkes nach Art eines GSM-Netzwerkes einsetzbar zur drahtlosen Kommunikation. Nutzdaten, wie Telefonnummern und Adressdaten, sind über eine Tastatur des Mobilfunkgerätes direkt eingebbar und können auf der Chipkarte abgespeichert werden. Weiterhin weist das Mobilfunkgerät eine Anschlussschnittstelle für einen Rechner auf. Als Anschlussschnittstelle kann hier beispielsweise eine RS 232-Schnittstelle verwendet werden, wobei der Rechner ein üblicher PC sein kann. Über eine Leitungsverbindung zwischen dem Rechner und dem Mobiltelefon können Nutzdaten in das Mobiltelefon geladen werden. Hierdurch ist es vorteilhafterweise nicht mehr erforderlich, Nutzdaten aufwendig über die unkomfortable Tastatur in Verbindung mit der recht kleinen graphischen Anzeigeeinheit des Mobilfunkgeräts einzugeben. Die Nutzdaten sind üblicherweise über eine Telefonbuchfunktion des Mobiltelefon editierbar.

Zwar schafft das Editieren von Nutzdaten mit Hilfe eines am Mobilfunkgerät angeschlossenen Rechners einen höheren Bedienkomfort; jedoch kann es bei der dennoch manuellen Eingabe von Nutzdaten am Rechner, insbesondere von Rufnummern, zu Fehleingaben kommen, welche zu unbrauchbaren Nutzdaten im Endgerät führen.

Aus dem allgemeinen Stand der Technik ist es auch bekannt, über einen am Internet angeschlossenen Rechner Nutzdaten von einem im Internet präsenten Auskunftsdienstleister zu beziehen. Die so beschaffbaren Nutzdaten stehen allerdings meist in einem Programmformat zur Verfügung, welches einer Nachbearbeitung bedarf, damit die Nutzdaten über den Rechner in das hieran angeschlossene Endgerät eingebbar sind. Allerdings ist auch diese Möglichkeit recht zeitaufwendig und bedarf eines Internetanschlusses.

Es ist daher die Aufgabe der vorliegenden Erfindung ein Verfahren sowie ein System zur Übermittlung von Nutzdaten an ein Endgerät zu schaffen, mit welchem auf einfache Weise konsistente Nutzdaten für einen gewünschten Teilnehmer direkt in das elektronische Telefonbuch des Endgeräts abrufbar gespeichert werden können.

Die Aufgabe wird verfahrenstechnisch durch die Merkmale von Anspruch 1 gelöst. Im Hinblick auf ein das Verfahren anwendendes System wird die Aufgabe durch Anspruch 7 gelöst. Die jeweils rückbezogenen abhängigen Ansprüche geben vorteilhafte Weiterbildungen der Erfindung wieder.

Die Erfindung schließt die technische Lehre ein, dass gewünschte Nutzdaten von einem am Kommunikationsnetzwerk angeschlossenen Nutzdaten-Auskunftssystem bezogen werden, in dem die gewünschten Nutzdaten vom Endgerät aus über das Kommunikationsnetzwerk vom Nutzdaten-Auskunftssystem abgefragt werden und anschließend über einen standardisierten Datendienst (z. B. SMS, MMS) an das Endgerät via Kommunikationsnetzwerk zur abrufbaren Abspeicherung gesendet werden.

Der Vorteil der erfindungsgemäßen Lösung liegt insbesondere darin, das die nunmehr extern von einem Auskunftsdienstleister bezogenen Nutzdaten in der Regel aktuell und konsistent sind. Eingabefehler durch den Teilnehmer sind somit ausgeschlossen. Des Weiteren bedarf es weit weniger Aufwand durch den Teilnehmer, die gewünschten Nutzdaten zu beziehen. Hierfür ist lediglich eine entsprechende Abfrage vom Endgerät über das Kommunikationsnetzwerk erforderlich und kurze Zeit später sind nach Rückantwort die gewünschten Nutzdaten für den Teilnehmer verfügbar. Eine dauerhafte Verfügbarkeit im Endgerät wird über die abrufbare Abspeicherung sichergestellt. Die erfindungsgemäße Lösung macht es also möglich, über einen Auskunftsdienstleister, der meist über sämtliche Nutzdaten verfügt, diese in einer solchen Form zu übermitteln, welche ein Endgerät in die Lage versetzt, diese übermittelten Nutzdaten direkt in den Speicher eines vorhandenen endgerätespezifischen Telefonbuchs zu hinterlegen. Somit braucht der das Endgerät benutzende Teilnehmer nicht mehr mit schwierigen Tastenkombinationen eine sehr zeitaufwendige und aus Sicht der graphischen Benutzeroberfläche sehr unkomfortabele und unübersichtliche Editierung von Nutzdaten an seinem Endgerät selbst vornehmen.

Wie bereits erwähnt, kann vom Nutzdaten-Auskunftssystem der standardisierte Datendienst SMS oder MMS zur Übermittlung der Nutzdaten an das Endgerät genutzt werden. Darüber hinaus ist es auch möglich, andere geeignete Datendienste hierfür zu nutzen. Dagegen kann die Abfrage von gewünschten Nutzdaten entweder fernmündlich oder ebenfalls über einen Datendienst über das Endgerät an das Nutzdaten-Auskunftssystem erfolgen. Ersterenfalls hat der das Endgerät nutzende Teilnehmer also die Möglichkeit, den Auskunftsdienstleister anzurufen, diesem wiederum seine gewünschten Nutzdaten mitzuteilen, welche ihm dann beispielsweise per SMS-Datendienst direkt zu seinem Endgerät gesendet werden. Letzterenfalls erfolgt dies Anfrage an den Auskunftsdienstleister via SMS oder dergleichen.

Vorteilhafterweise ist es insbesondere letzterenfalls möglich für die Abfrage per Datendienst die sogenannten CLIP-Information eines beim Endgerät eingehenden Anrufes zu verwenden. Empfängt also ein Endgerät einen Anrufwunsch mit dazugehöriger Rufnummer (CLIP), welcher jedoch vom Teilnehmer nicht entgegengenommen werden konnte, und in einer Anruferliste des Endgeräts eingetragen wurde und ferner auch keinen Teilnehmer, sprich keiner bereits im Telefonbuch des Endgeräts hinterlegten Person zugeordnet werden kann, so ist es möglich, mit dieser CLIP-Information eine Nutzdatenanfrage an den Auskunftsdienstleister zu stellen. Optimaler Weise kann diese Funktionalität in die graphische Benutzeroberfläche des Endgeräts derart implementiert werden, dass der Anstoß für die Anfrage der Nutzdaten beim Auskunftsdienstleister lediglich noch mit einer Tastenbetätigung quittiert werden muss. Mit dieser Weiterbildung der erfindungsgemäßen Lösung ist ein besonders komfortabler Bezug von Nutzdaten möglich.

Gemäß einer weiteren, die Erfindung verbessernde Maßnahme ist vorgesehen, das die vom Endgerät empfangenden Nutzdaten mit einer am Endgerät einstellbaren Option einer automatischen oder zuvor vom Teilnehmer zu quittierenden Mitteilung gespeichert werden. Somit hat der das Endgerät nutzende Teilnehmer die Möglichkeit, über eine menügesteuerte Einstellung seines Endgeräts eine der beider Speicheroptionen auszuwählen. Bei einer automatischen Abspeicherung der vom Endgerät empfangenen Nutzdaten wird dem Teilnehmer über die graphische Benutzeroberfläche keine vorherige Freigabe für die Datenübernahme abverlangt. In diesem Zusammenhang kann zumindest jedoch eine vollzogene automatische Übernahme von Nutzdaten über die graphische Benutzeroberfläche und/oder ein Tonsignal mitgeteilt werden. Bei einer zuvor vom Teilnehmer zu quittierenden Abspeicherung der vom Endgerät empfangenen Nutzdaten hat der Teilnehmer die Möglichkeit, sich von der Plausibilität und Vollständigkeit der vom Endgerät empfangenen Nutzdaten zu überzeugen.

Im Hinblick auf eine systemtechnische Umsetzung der vorliegenden Erfindung ist es auch möglich, dass das Endgerät über eine TK-Anlage mit dem Kommunikationsnetzwerk in Verbindung stehen kann. Unter TK-Anlage wird in diesem Zusammenhang eine Kommunikationseinheit verstanden, deren Basisstation mit dem Kommunikationsnetzwerk, insbesondere ein ISDN-Netz, in Verbindung steht, und mit welchem mehrere Endgeräte, wie schnurlose Telefone, Faxgeräte und dergleichen betreibbar sind. Das erfindungsgemäße Verfahren zur Übermittlung von Nutzdaten an ein Endgerät erfolgt insoweit über die TK-Anlage, welche in diesem Fall ebenfalls datendienstfähig sein muss.

Gemäß einer weiteren die Erfindung verbessernden Maßnahme sind auch die in der Basisstation der TK-Anlage zentral abgespeicherten Nutzdaten über den standardisierten Datendienst oder auf andere Weise an das abfragende Endgerät übertragbar. Somit können in einfacher Art alle an der TK-Anlage angeschlossenen Endgeräte die hierin hinterlegten Nutzdaten beziehen.

Gemäß eines weiteren Aspekts der Erfindung kann das Nutzdaten-Auskunftssystem eine datendienstfähige Auskunftsdiensteinheit - beispielsweise eine Rechneranlage - mit angeschlossener Nutzdaten-Datenbank eines Auskunftsdienstleisters umfassen. Über die datendienstfähige Auskunftsdiensteinheit ist das Nutzdaten-Auskunftssystem an das Kommunikationsnetzwerk angeschlossen. In diesem Zusammenhang kann die datendienstfähige Auskunftsdiensteinheit ein SMS/MMS-Servicecenter eines Telekommunikationsdienstleisters umfassen oder zumindest hiermit in Verbindung stehen, um systemtechnisch die Realisierung der Nutzdatenübertragung via standardisiertem Datendienst umzusetzen. Beide Alternativen gewährleisten ein einfaches Zusammenwirken des Nutzdaten-Auskunftssystems mit einem SMS/MMS-Servicecenter. Erhält somit das SMS/MMS-Serviccenter eine SMS oder MMS als Abfrage für gewünschte Nutzdaten, wird diese an das angeschlossene Nutzdaten-Auskunftssystem weitergeleitet. Im Nutzdaten-Auskunftssystem wird daraufhin ein Suchmechanismus mit Zugriff auf die angeschlossene Nutzdaten-Datenbank gestartet. Hierfür ist es natürlich erforderlich, dass alle Nutzdaten in Form von definierten Datensätzen recherchierbar in der Nutzdaten-Datenbank hinterlegt sind. Werden die zu der Anfrage passenden Nutzdaten gefunden, schickt das Nutzdaten-Auskunftssystem diese mit den entsprechenden Parametern an das SMS/MMS-Servicecenter, welches hieraus eine SMS/MMS generiert und diese an das auskunftsersuchende Endgerät sendet.

Weitere die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt eine Blockschaltbilddarstellung eines Systems zur Übermittlung von Nutzdaten an ein in einem Kommunikationsnetzwerk angebundenes datendienstfähiges Endgerät.

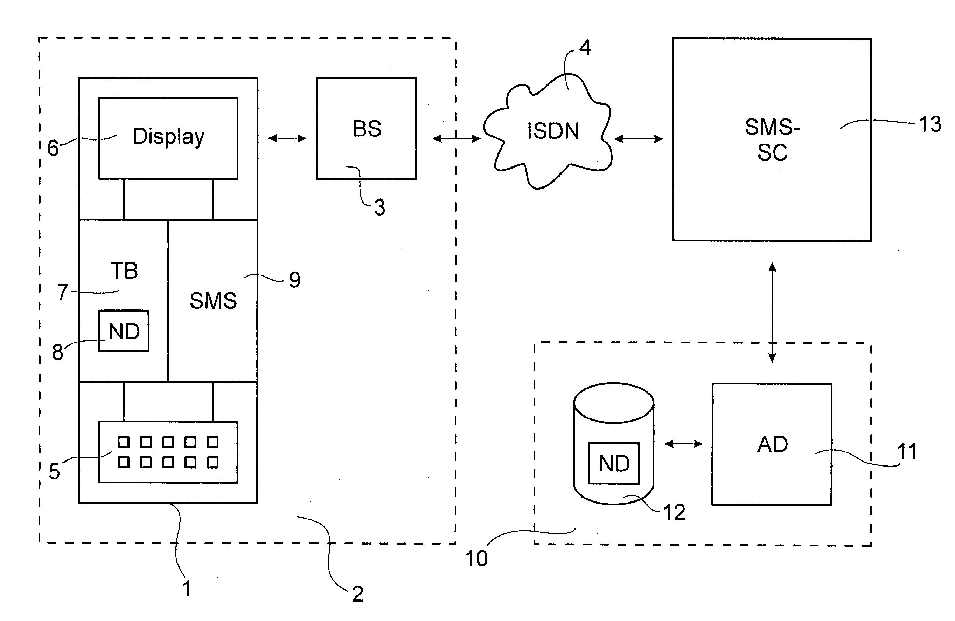

Gemäß Figur 1 umfasst ein System zur Übermittlung von Nutzdaten 8 ein datendienstfähiges Endgerät 1 in Form eines ISDN-Festnetztelefons, das Bestandteil einer TK-Anlage 2 ist und mit einer Basisstation 3 der TK-Anlage 2 in Verbindung steht. An die Basisstation 3 der TK-Anlage 2 sind weitere - nicht dargestellte - Endgeräte angeschlossen. Die Basisstation 3 steht mit einem Kommunikationsnetzwerk 4 in Verbindung. Das Kommunikationsnetzwerk 4 ist in diesem Ausführungsbeispiel ein ISDN-Netz. Vom Endgerät 1 abgehende Anrufe werden über die Basisstation 3 an das Kommunikationsnetzwerk 4 weitergeleitet. Eingehende Anrufe vom Kommunikationsnetzwerk 4 vermittelt die Basisstation 3 je nach Rufnummer automatisch an das richtige Endgerät 1 o.a. weiter.

Das hier exemplarisch dargestellte Endgerät 1 umfasst eine herkömmliche numerische Tastatur 5 als Eingabeeinheit sowie ein Display 6 mit einer graphischen Benutzeroberfläche, welche die menügesteuerten Funktionen des Endgeräts 1 anzeigt. Die menügesteuerten Funktionen des Endgeräts 1 werden über die Tastatur 5 in an sich bekannter Weise bedient. Die im Endgerät 1 integrierte Elektronik umfasst eine Telefonbuchfunktion 7. Mit der Telefonbuchfunktion 7 sind Nutzdaten - wie Name, Adresse, Rufnummern - von anderen Teilnehmern im Endgerät 1 abrufbar gespeichert. Eine Auswahl von einem Nutzdatenspeicher 8 hinterlegten Nutzdaten erfolgt menügesteuert über das Display 6 im Zusammenwirken mit Eingaben über die Tastatur 5.

Das Endgerät 1 umfasst des Weiteren auch eine SMS-Funktion 9, mit welcher - in an sich bekannter Weise - über die Tastatur 5 einzugebenden Textnachrichten vom Endgerät 1 aus über das Kommunikationsnetzwerk 4 zu einem Endgerät 1 eines anderen Teilnehmers gesendet werden können.

Erfindungsgemäß bezieht das datendienstfähige Endgerät 1 gewünschte Nutzdaten von einem ebenfalls am Kommunikationsnetzwerk 4 angeschlossenen Nutzdaten-Auskunftssystem 10. Das Nutzdaten-Auskunftssystem 10 besteht in diesem Ausführungsbeispiel im Wesentlichen aus einer datendienstfähigen Auskunftsdiensteinheit 11 mit angeschlossener Nutzdaten-Datenbank 12 eines Auskunftsdienstleisters. Über die Auskunftsdiensteinheit 11 ist das Nutzdaten-Auskunftssystem 10 an einem SMC-Servicecenter 13 angeschlossen, das wiederum mit dem Kommunikationsnetzwerk 4 in Verbindung steht. Die Auskunftsdiensteinheit 11 umfasst einen Rechner, welcher entsprechend eingehender Abfragen die gewünschten Nutzdaten aus der Nutzdaten-Datenbank 12 beschafft, um diese Antwort an das abfragende Endgerät 1 via SMS-Servicecenter 13 per Antwort-SMS zurückzusenden.

Die Abfrage und Übermittlung von gewünschten Nutzdaten an das Endgerät 1 erfolgt, indem die gewünschten Nutzdaten vom datendienstfähigen Endgerät 1 aus über das Kommunikationsnetzwerk 4 vom Nutzdaten-Auskunftssystem 10 abgefragt werden. Für die Abfrage gewünschter Nutzdaten - beispielsweise Name und Adresse eines Teilnehmers - kann die CLIP-Information eines beim Endgerät 1 eingegangenen bekannten Anrufs verwendet werden. Die über die CLIP-Information bekannte Rufnummer des unbekannten Teilnehmers wird per SMS über das Kommunikationsnetzwerk 4 an das SMS-Servicecenter 13 gesendet. Das SMS-Servicecenter 13 erkennt die eingehende SMS als Abfrage für gewünschte Nutzdaten und leitet die Abfrage automatisch an das Nutzdaten-Auskunftssystem 10 weiter. Die Auskunftsdiensteinheit 11 beschafft daraufhin die gewünschten Nutzdaten aus der angeschlossenen Nutzdaten-Datenbank 12 und sendet die selektierten Nutzdaten als Antwort an das SMS-Servicecenter 13 zurück. Das SMS-Servicecenter 13 wandelt diese Information in eine SMS um und sendet diese über das Kommunikationsnetzwerk 4 an das abfragende datendienstfähige Endgerät 1 zurück. Hierfür muss die SMS ein spezielles Format besitzen, um vom Endgerät selbständig als Dateninformation erkannt zu werden. Im datendienstfähigen Endgerät 1 stehen nun die angeforderten Nutzdaten - Name und Adresse - zur Abspeicherung und zum weiteren Abruf bereit.

Zur Identifikation einer Nutzdaten enthaltenen SMS wird zwecks Authentifizierung des Auskunftsdienstleisters eine spezielle Senderufnummer definiert, welche beim Empfang der angefragten Nutzdaten dem Endgerät 1 signalisiert, das der Inhalt der SMS die beim Nutzdaten-Auskunftssystem 10 abgefragten Nutzdaten sind. Alternativ hierzu kann der Inhalt einer nutzdatenenthaltenen SMS auch mit einem definierten Stammdatenparameter beginnen, der das datendienstfähige Endgerät 1 veranlasst, die nach dem Stammdatenparameter in der SMS folgenden Daten als Nutzdaten 8 zu erkennen, auszuwerten und im Endgerät 1 abrufbar abzuspeichern.

Die Erfindung ist nicht beschränkt auf das vorstehend beschriebene Ausführungsbeispiel. Es sind vielmehr auch Abwandlungen hiervon denkbar, welche vom Schutzbereich der nachfolgenden Ansprüche umfasst sind. So ist es beispielsweise auch möglich, anstelle des Datendienstes SMS den Datendienst MMS u. a. zur Übermittlung von Nutzdaten zu verwenden. In diesem Falle kann in der Betreffzeile einer MMS ein Stammdatenparameter definiert werden, der das Endgerät veranlasst die der MMS beigefügten Dateien als Nutzdaten zu erkennen. Des Weiteren ist die vorliegende Erfindung nicht beschränkt auf eine Abfrage gewünschter Nutzdaten per Datendienst. Die Abfrage kann auch fernmündlich durch Anruf über das Endgerät 1 an das Nutzdaten-Auskunftssystem 10 erfolgen. In diesem Falle ist die Anfrage von einem Call-Center oder einem Sprachcomputer entgegenzunehmen und entsprechend zu bearbeiten. Schließlich sei darauf hingewiesen, dass die vorliegende Erfindung vorzugsweise sowohl für den Festnetzbereich als auch für den Mobilfunkbereich zur Anwendung kommen kann und beispielsweise auch für Voice-Over-IP.

### B e z u g s z e i c h e n l i s t e

- **1**: Datendienstfähiges Endgerät
- **2**: TK-Anlage
- **3**: Basisstation
- **4**: Kommunikationsnetzwerk
- **5**: Tastatur
- **6**: Display
- **7**: Telefonbuchfunktion
- **8**: Nutzdatenspeicher
- **9**: SMS-Funktion
- **10**: Nutzdaten-Auskunftssystem
- **11**: Auskunftsdiensteinheit
- **12**: Nutzdaten-Datenbank
- **13**: SMS-Servicecenter

## Patentansprüche

1. Verfahren zur Übermittlung von Nutzdaten an ein in einem Kommunikationsnetzwerk (4) eingebundenes datendienstfähiges Endgerät (1), in welchem die Nutzdaten abrufbar abgespeichert werden,
**dadurch gekennzeichnet, dass** gewünschte Nutzdaten von einem ebenfalls am Kommunikationsnetzwerk (4) angeschlossenen Nutzdaten-Auskunftssystem (10) bezogen werden, indem die gewünschten Nutzdaten vom Endgerät (1) aus über das Kommunikationsnetzwerk (4) vom Nutzdaten-Auskunftssystem (10) abgefragt werden, und anschließend die gewünschten Nutzdaten über einen standardisierten Datendienst an das Endgerät (1) via Kommunikationsnetzwerk (4) zur abrufbaren Abspeicherung gesendet werden.

2. Verfahren nach Anspruch 1,
**dadurch gekennzeichnet, dass** vom Nutzdaten-Auskunftssystem (10) der standardisierte Datendienst SMS oder MMS zur Übermittlung der Nutzdaten an das Endgerät (1) genutzt wird.

3. Verfahren nach Anspruch 1,
**dadurch gekennzeichnet, dass** die Abfage von gewünschten Nutzdaten fernmündlich vom Teilnehmer durch Anruf über das Endgerät (1) an das Nutzdaten-Auskunftssystem (10) durchgeführt wird.

4. Verfahren nach Anspruch 1,
**dadurch gekennzeichnet, dass** der standardisierte Datendienst SMS oder MMS vom Endgerät (1) zur Übertragung der Abfage von gewünschten Nutzdaten an das Nutzdaten-Auskunftssystem (10) genutzt wird.

5. Verfahren nach Anspruch 4,
**dadurch gekennzeichnet, dass** für die Abfrage für gewünschte Nutzdaten die CLIP-Information eines beim Endgerät (1) eingehenden Anrufs verwendet wird.

6. Verfahren nach Anspruch 1,
**dadurch gekennzeichnet, dass** die vom Endgerät (1) empfangenen Nutzdaten mit einer am Endgerät (1) einstellbaren Option einer automatischen oder zuvor vom Teilnehmer zu quittierenden Abspeicherung gespeichert werden.

7. System zur Übermittlung von Nutzdaten an ein in einem Kommunikationsnetzwerk (4) eingebundenes datendienstfähiges Endgerät (1), in welchem die Nutzdaten abrufbar abgespeichert sind,
**dadurch gekennzeichnet, dass** das Endgerät (1) die gewünschten Nutzdaten von einem ebenfalls am Kommunikationsnetzwerk (4) angeschlossenen Nutzdaten-Auskunftssystem (10) bezieht, indem das Endgerät (1) die gewünschten Nutzdaten über das Kommunikationsnetzwerk (4) vom Nutzdaten-Auskunftssystem (10) abfragt, das anschließend die gewünschten Nutzdaten über einen standardisierten Datendienst an das Endgerät (1) via Kommunikationsnetzwerk (4) zur abrufbaren Abspeicherung sendet.

8. System nach Anspruch 7,
**dadurch gekennzeichnet, dass** die Nutzdaten aus personenspezifischen Informationen bestehen, ausgewählt aus einer Gruppe, enthaltend Informationen über Namen, Adressdaten, Geburtstagsdaten, Rufnummern und/oder Faxnummern eines Teilnehmers.

9. System nach einem der vorstehenden Ansprüche 7 bis 8,
**dadurch gekennzeichnet, dass** das datendienstfähige Endgerät (1) zur abrufbaren Abspeicherung der empfangenen Nutzdaten mit einer auf einem Display (6) anzeigbaren menugesteuerten Telefonbuchfunktion ausgestattet ist.

10. System nach einem der vorstehenden Ansprüche 7 bis 9,
**dadurch gekennzeichnet, dass** das datendienstfähige Endgerät (1) nach Art eines schnurgebundenen/schnurlosen Festnetztelefons, eines Faxgeräts, eines Mobilfunktelefons oder ein PDA's ausgebildet ist.

11. System nach einem der vorstehenden Ansprüche 7 bis 10,
**dadurch gekennzeichnet, dass** das Endgerät (1) über eine TK-Anlage (2) mit dem Kommunikationsnetzwerk (4) in Verbindung steht.

12. System nach einem der vorstehenden Ansprüche 7 bis 11,
**dadurch gekennzeichnet, dass** die in einer Basisstation (3) der TK-Anlage (2) zentral abgespeicherten Nutzdaten über den standardisierten Datendienst an das abfragende Endgerät (1) übertragbar sind.

13. System nach einem der vorstehenden Ansprüche 7 bis 12,
**dadurch gekennzeichnet, dass** das Nutzdaten-Auskunftssystem (10) eine datendienstfähige Auskunftsdiensteinheit (11) mit angeschlossener Nutzdaten-Datenbank (12) eines Auskunftsdienstleisters umfasst, die mit dem Kommunikationsnetzwerk (4) in Verbindung steht.

14. System nach einem der vorstehenden Ansprüche 7 bis 13,
**dadurch gekennzeichnet, dass** das Nutzdaten-Auskunftssystem (10) ein SMS/MMS-Servicecenter (13) umfasst oder hiermit in Verbindung steht.

15. System nach einem der vorstehenden Ansprüche 7 bis 14,
**dadurch gekennzeichnet, dass** das Kommunikationsnetzwerk (4) ein Festnetz oder ein Mobilfunknetz eines Telekommunikations-Netzwerkbetreibers ist.
